(19) Europäisches Patentamt
European Patent Office
Office européen des brevets

(11) **EP 4 628 280 A1**

(12) **EUROPEAN PATENT APPLICATION**
published in accordance with Art. 153(4) EPC

(43) Date of publication:
**08.10.2025 Bulletin 2025/41**

(21) Application number: **23897269.9**

(22) Date of filing: **11.10.2023**

(51) International Patent Classification (IPC):
**B29C 48/92** (2019.01)      **B29C 48/88** (2019.01)
**B29C 55/14** (2006.01)

(52) Cooperative Patent Classification (CPC):
**B29C 48/88; B29C 48/92; B29C 55/14**

(86) International application number:
**PCT/JP2023/036824**

(87) International publication number:
**WO 2024/116610 (06.06.2024 Gazette 2024/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.12.2022 JP 2022193669**

(71) Applicant: **The Japan Steel Works, Ltd.
Tokyo 141-0032 (JP)**

(72) Inventors:
• **YOKOMIZO, Kazuya**
  **Tokyo 141-0032 (JP)**
• **ISHIGURO, Ryo**
  **Tokyo 141-0032 (JP)**
• **KIMURA, Koichi**
  **Tokyo 141-0032 (JP)**

(74) Representative: **Simmons & Simmons LLP
(Munich)
Lehel Carré
Gewürzmühlstraße 11
80538 Munich (DE)**

(54) **MOLDING CONDITION ESTIMATION METHOD, PROGRAM, ESTIMATION DEVICE, DISPLAY DEVICE, AND LEARNING MODEL GENERATION METHOD**

(57)    Provided is a molding condition estimation method or the like with which a molding condition can be suitably estimated. In this molding condition estimation method, a computer performs processing to acquire a film temperature requested for a film molded by a film molding machine and estimate a molding condition satisfying the acquired film temperature using an estimation model that shows a state of either the film molding machine to perform extrusion molding or a film molded by the film molding machine, is constructed on the basis of molding information during molding detected by a detection device and a film temperature predicted from the molding information, and estimates a molding condition with respect to the film temperature.

FIG.1

EP 4 628 280 A1

## Description

Technical Field

The present invention relates to a molding condition estimation method, a program, an estimation device, a display device and a generation method for a learning model.

Background Art

A film molding machine molding a film by solidifying molten resin discharged from a discharge port of a die has been known. In the film molding machine, it is necessary that a condition setting work be first performed for modifying setting values of items for various molding conditions to obtain molding conditions so that specifications required for a molded film are satisfied. The adjustment of these molding conditions is performed based on the operator's experience and requires repeated trial and error to obtain appropriate molding conditions. Hence, techniques to assist the operator in setting the molding conditions have been proposed.

Patent Document 1 discloses, for example, an injection molding machine system capable of appropriately adjusting molding conditions of an injection molding machine using a machine learner that is trained with reinforcement learning.

Citation List

Patent Literature

Patent Literature 1: Japanese Patent Application Laid-Open Publication No. 2019-166702

Summary of Invention

Technical Problems

Regarding a learning model used for adjusting molding conditions, taking molding information during molding into account has not yet been fully discussed.

The object of the present disclosure is to provide a molding condition estimation method and the like capable of suitably estimating molding conditions. Solution to Problems

A molding condition estimation method according to one aspect of the present disclosure causes a computer to execute processing of: acquiring a film temperature required for a film to be molded by a film molding machine; and estimating a molding condition satisfying the acquired film temperature by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine.

A program according to one aspect of the present disclosure causes a computer to execute processing of: acquiring a film temperature required for a film to be molded by a film molding machine; and estimating a molding condition satisfying the acquired film temperature by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine.

An estimation device according to one aspect of the present disclosure comprises an acquisition unit that acquires a film temperature required for a film to be molded by a film molding machine; and an estimation unit that estimates a molding condition satisfying the film temperature acquired at the acquisition unit by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine.

A display device according to one aspect of the present disclosure comprises an acquisition unit that acquires a film temperature required for a film to be molded by a film molding machine; an estimation unit that estimates a molding condition satisfying the film temperature acquired at the acquisition unit by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine; and a display unit that displays information related to the estimated molding condition.

A generation method for a learning model according to one aspect of the present disclosure comprises acquiring training data including molding information during molding that is detected by a detection device and that indicates a state of a film molding machine performing extrusion molding or a state of a film molded by the film molding machine and a film temperature predicted from the molding information; and generating a learning model trained to output a molding condition when a film temperature is input based on the acquired training data.

Advantageous Effects of Invention

According to the present disclosure, it is possible to suitably estimate molding conditions.

Brief Description of Drawings

FIG. 1 is a schematic view depicting a molding machine system according to a first embodiment.
FIG. 2 is a block diagram depicting an example of the configuration of a data collection device.
FIG. 3 is a block diagram illustrating an example of the configuration of an information processing apparatus.
FIG. 4 is an explanatory view depicting a prediction method for a temperature prediction model.
FIG. 5 is a schematic view depicting an example of a molding information setting screen for the temperature prediction model.
FIG. 6 is a schematic view depicting an example of a molding information setting screen for the temperature prediction model.
FIG. 7 is a schematic view depicting an example of a molding information setting screen for the temperature prediction model.
FIG. 8 is a schematic view depicting an example of a screen illustrating a prediction result of the temperature prediction model.
FIG. 9 is a flowchart depicting an example of a processing procedure to be executed by the information processing apparatus.
FIG. 10 is a block diagram illustrating an example of the configuration of the information processing apparatus according to the second embodiment.
FIG. 11 is an explanatory view depicting the outline of an estimation model.
FIG. 12 is a flowchart depicting an example of a procedure for estimation model generation processing.
FIG. 13 is a flowchart depicting an example of a procedure for molding condition estimation processing.

Description of Embodiments

The present disclosure will be specifically described with reference to the drawings illustrating embodiments thereof.

First Embodiment

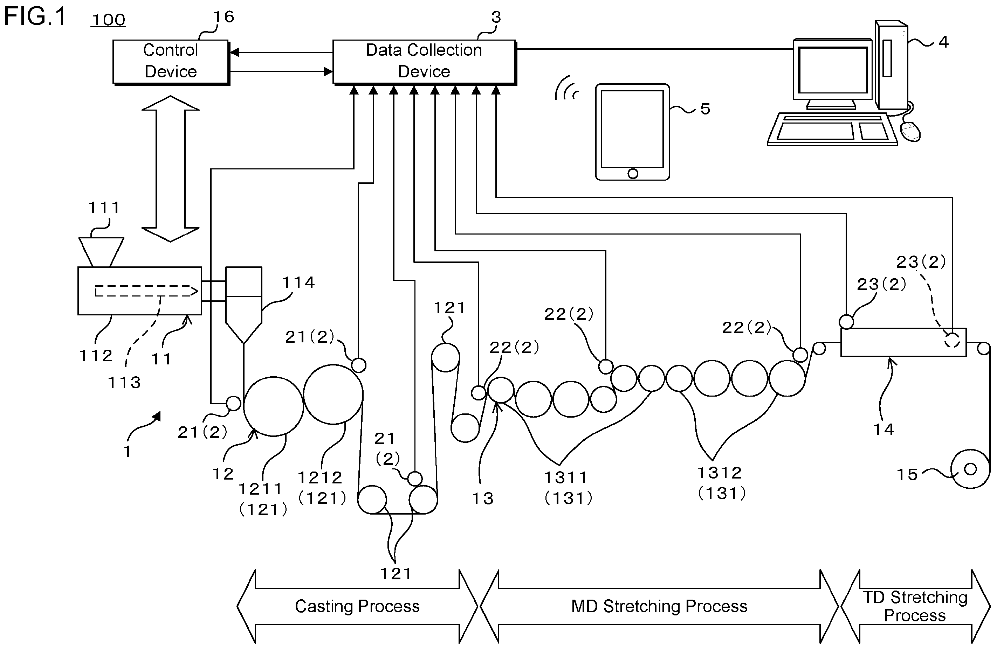

FIG. 1 is a schematic view depicting a molding machine system 100 according to a first embodiment. The molding machine system 100 is provided with a film molding machine (hereinafter simply referred to as a molding machine) 1, multiple detection devices 2, a data collection device 3, an information processing apparatus 4 and a display device 5.

<Molding Machine 1>

The molding machine 1 is provided with an extruder 11, a casting device 12, an MD stretcher 13, a TD stretcher 14, a winder 15 and a control device 16.
The extruder 11, which is, for example, a single extruder or a twin-screw extruder, is provided with a cylinder 112 with a hopper 111 into which resin raw materials are input, a screw 113 and a die 114. The screw 113 is rotatably inserted into a hole of the cylinder 112. The screw 113 carries the resin raw materials input into the hopper 111 in the direction of extrusion (to the right in FIG. 1), and melts and kneads the resin raw materials. The extruder 11 extrudes the melted resin raw materials into a film through a narrow gap at the tip of the die 114.
The casting device 12 is provided with multiple cast rolls 121 for cooling and molding a high-temperature melt extruded from the die 114. The multiple cast rolls 121 include a first roll 1211 and a second roll 1212. The first roll 1211 is a metal roll with a temperature control part (not illustrated) for cooling the melt, for example, and is journaled below the die 114. The first roll 1211 holds the film-like melt extruded from the die 114 between itself and the second roll 1212, and molds the melt in a film (sheet) form while cooling it in a short time together with the second roll 1212. The casting device 12 controls the thickness of a film so as to be fall within a predetermined range, which provides an unstretched film. The temperature adjustment method of the first roll 1211 includes, but not particularly limited to, a method using a heat medium such as air, water, oil or the like, or a method with an electric heater or dielectric heating, for example. In the example illustrated in FIG. 1, the multiple cast rolls 121 further include rolls for cooling or conveying melt.

The MD stretcher 13 includes multiple tension rolls 131, receives the unstretched film conveyed from the casting device 12 between the tension rolls 131 and stretches it in a longitudinal direction (film conveyance direction or machine direction: MD). The multiple tension rolls 131 include a heating roll 1311 with a temperature adjustment part for heating a film and a cooling roll 1312 with a temperature adjustment part for cooling a film. The temperature adjustment method for the tension rolls 131 includes methods similar to those for the cast roll 121 as described above. The film is heated to a predetermined temperature range in which it is stretchable while in contact with the heating roll 1311, and then stretched longitudinally using the difference in a rotation speed between the cooling rolls 1312. The film is first stretched using the first cooling roll 1312 as a starting roll and further stretched second using the second cooling roll 1312 as a starting roll. The stretching ratio in the MD direction can be adjusted by a velocity ratio between the tension rolls 131. Note that FIG. 1 is a mere example, and the number of tension rolls 131 is not limited to the example illustrated in FIG. 1.

The TD stretcher 14 transversely stretches the film having been longitudinally stretched by the MD stretcher 13 in the width direction (film width direction or transverse direction: TD). The TD stretcher 14, which is a tenter stretcher such as, for example, a clip tenter, a pin tenter or the like and has a heating device such as a hot air blower, (not illustrated), transversely stretches the film by heating the film within a range of a predetermined temperature that allows the film to stretch. The TD stretcher 14 has a running mechanism including a rail and chain (not illustrated) and multiple clips attached continuously to the chain. The rail is positioned so as to spread toward the width (TD) direction downstream of the film conveyance direction (MD).

The clips grasp the edges of the film at the entrance of the TD stretcher 14 and travel on the rail while being guided by the rail to convey the film in the film conveyance direction (MD), and releases the film at the outlet of the TD stretcher 14. The film, which is grasped at its both edges by the clips, passes through the hot air blower in the downstream direction of the film conveyance direction. The hot air blower disposed above and below the running mechanism blows hot air onto both surfaces of the film to thereby stretch the film in the width direction. The stretching factor in the TD direction can be adjusted according to the amount of air. The film stretched in the width direction is wound up by the winder 15.

A casting process herein refers to the process performed by the casting device 12 among the molding processes performed by the molding machine 1. An MD stretching process refers to a process performed by the MD stretcher 13 among the molding processes performed by the molding machine 1. A TD stretching process refers to a process performed by the TD stretcher 14 among the molding processes performed by the molding machine 1.

The control device 16 is a computer for performing operation control of the molding machine 1, and is provided with a control unit such as a CPU (Central Processing Unit) not illustrated, a transmission and reception unit that transmits and receives information to and from the data collection device 3 and a display unit. The control device 16 transmits operation data indicating an operating status of the molding machine 1 to the data collection device 3.

<Detection Device 2>

The detection device 2 includes sensors for detecting states of the molding machine 1 and a film (resin) molded by the molding machine 1. The detection device 2 is connected to the data collection device 3 and directly or indirectly outputs measurement data obtained by detection to the data collection device 3. The measurement data is data of time-series sensor values indicating the detected state of the molding machine 1 and the film molded by the molding machine 1. The measurement data may be data of at least one of the states of the molding machine 1 and the film. The detection device 2 may be provided in the molding machine 1 in advance as an indispensable element for operation control, or may be added at a later time.

Examples of the measurement data detected by the detection device 2 include temperature, length, thickness, image, weight, flow rate, position, speed, acceleration, current, voltage, pressure, time, torque, force, strain, power consumption and the like. These measurement data can be measured using a thermometer, an infrared sensor, a length measurement sensor, a laser sensor, an X-ray sensor, a camera, a weightometer, a flowmeter, a position sensor, a speedometer, an accelerometer, an ammeter, a voltmeter, a tachometer, a timer, a torque sensor, a wattmeter and the like.

The detection device 2 includes, for example, the first sensor 21 that detects measurement data in the casting device 12, the second sensor 22 that detects measurement data in the MD stretcher 13 and a third sensor 23 that detects measurement data in the TD stretcher 14.

The first sensor 21 includes, for example, a laser sensor for detecting a width of a film, a laser sensor for detecting a thickness of a film, a contact thermometer or a contactless thermography camera for detecting a temperature of a film, a contact thermometer or a contactless thermography camera for detecting a temperature of the cast roll 121, a contact thermometer or a contactless thermography camera for detecting a temperature of the heating medium at the temperature adjustment part in the cast roll 121 and a flowmeter for detecting a flow rate of the aforementioned heat medium and the like.

The second sensor 22 includes, for example, a laser sensor for detecting a width of a film, a laser sensor for detecting a thickness of a film, a contact thermometer or a contactless thermography camera for detecting a temperature of a film, a contact thermometer or a contactless thermography camera for detecting a temperature of the tension roll 131, a contact thermometer or a contactless thermography camera for detecting a temperature of the heating medium at the temperature adjustment part in the tension roll 131 and a flowmeter for detecting a flow rate of the aforementioned heating medium and the like.

The third sensor 23 includes, for example, a laser sensor for detecting a width of a film, a laser sensor for detecting a thickness of a film, a contact thermometer or a contactless thermography camera for detecting a temperature of a film, a contact thermometer or a contactless thermography camera for detecting a temperature of the air blown out from the hot air blower, a speedometer for detecting a speed of the air, a rotating meter for detecting the number of rotations of a fan in the hot air blower and the like.

The detection device 2 is provided at a suitable position in the molding machine 1 so as to detect measurement data when a film passes through a desired passage position in the molding machine 1. Note that the measurement data detected by the detection device 2 may also include data of the calculation value indirectly calculated from the sensor value, not limited to data of the sensor value directly detected by the detection device 2.

The measurement data detected by the detection device 2 includes, but not limited to, a film width, a film thickness, a film initial temperature, a temperature of the cast roll 121, a heat transfer rate between the cast roll 121 and a film, a temperature of the tension roll 131, a heat transfer rate between the tension roll 131 and a film, a temperature of air blown out from the hot air blower, a speed of air blown out from the hot air blower, for example.

The aforementioned heat transfer rate is an example of the calculation value and can be calculated based on the temperature and flow rate of the heating medium (e.g., water) at the temperature adjustment part in the cast roll 121 or the tension roll 131. Likewise, the speed of air can be calculated based on the number of rotations of the fan in the hot air blower.

<Data Collection Device 3>

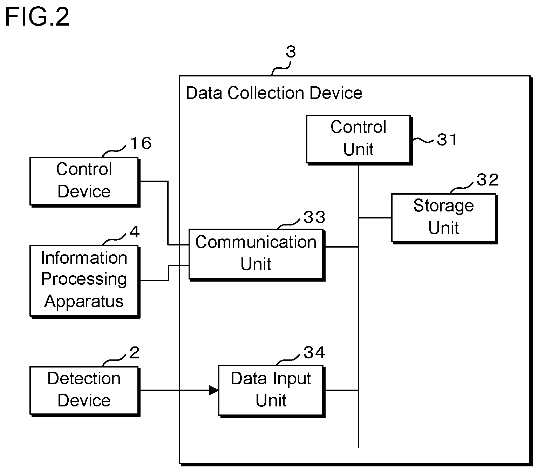

FIG. 2 is a block diagram depicting an example of the configuration of the data collection device 3. The data collection device 3 is a computer and is provided with a control unit 31, a storage unit 32, a communication unit 33 and a data input unit 34. The storage unit 32, the communication unit 33 and the data input unit 34 are connected to the control unit 31. The data collection device 3 is a Programmable Logic Controller (PLC), for example.

The control unit 31 includes an arithmetic processing circuit such as a CPU (Central Processing Unit), a multi-core CPU, an Application Specific Integrated Circuit (ASIC) or a Field-Programmable Gate Array (FPGA), an internal storage device such as a ROM (Read Only Memory) or a RAM (Random Access Memory) and the like. The control unit 31 executes a control program stored in the storage unit 32, which will be described later, to perform processing of collecting molding information and transmitting it to the information processing apparatus 4. Note that each functional part of the data collection device 3 may be realized in software or in hardware, or in combination thereof.

The storage unit 32 is provided with a nonvolatile memory such as a hard disk, an EEPROM (Electrically Erasable Programmable ROM), a flash memory or the like. The storage unit 32 stores the control program for causing the computer to execute processing of collecting molding information.

The communication unit 33 is provided with a communication module for communicating with an external device through a communication network such as a LAN, the Internet or the like. The control unit 31 can transmit and receive various information to and from the control device 16 and the information processing apparatus 4 via the communication unit 33. The control unit 31 acquires operation data of the molding machine 1 via the communication unit 33.

The data input unit 34 is an input interface to which signals output from the detection device 2 are input. The detection device 2 is connected to the data input unit 34. The control unit 31 acquires measurement data output from the detection device 2 via the data input unit 34 as needed. The data collection device 3 may also acquire measurement data via the control device 16 and the communication unit 33.

<Information Processing Apparatus 4>

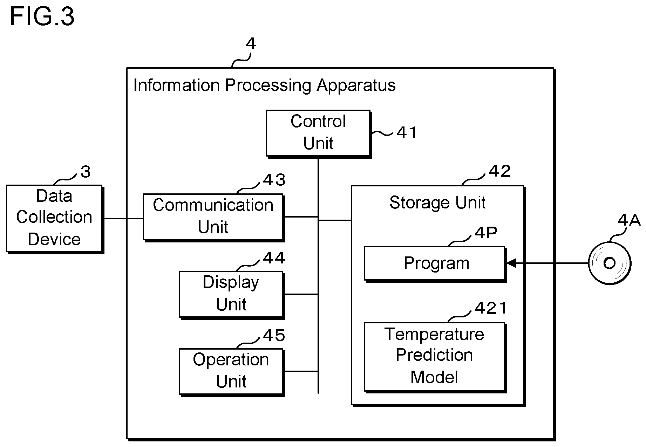

FIG. 3 is a block diagram illustrating an example of the configuration of the information processing apparatus 4. The information processing apparatus 4 corresponds to a prediction device that predicts a temperature of a film (film temperature) based on molding information including measurement data.

The information processing apparatus 4 is a computer, and is provided with a control unit 41, a storage unit 42, a communication unit 43, a display unit 44 and an operation unit 45. The storage unit 42, the communication unit 43, the display unit 44 and the operation unit 45 are connected to the control unit 41. Note that the information processing apparatus 4 may be a server device connected to a network. The information processing apparatus 4 employs a local machine provided in a factory where the molding machine 1 is placed to thereby suitably execute prediction processing in the factory. The information processing apparatus 4 may be configured with multiple computers to perform distributed processing, may be realized by multiple virtual machines set up in a single server, or may be realized using a cloud server.

The control unit 41 includes an arithmetic processing circuit such as a CPU, a multi-core CPU, an ASIC or an FPGA, an internal storage device such as a ROM or a RAM and an I/O terminal and the like. The control unit 41 functions as an information processing apparatus 4 according to the present embodiment by executing a program 4P stored in the storage unit 42, which will be described later. Note that each functional part of the information processing apparatus 4 may be realized in software or in hardware, or in combination thereof.

The storage unit 42 has a nonvolatile memory such as, for example, a hard disk, a flash memory, an SSD (Solid State Drive) or the like. The storage unit 42 may be an external storage device connected to the information processing apparatus 4. The storage unit 42 stores various programs and data to be referred to by the control unit 41. The storage unit 42 of the present embodiment stores the program 4P for causing the computer to execute processing related to prediction of a film temperature and a temperature prediction model 421 necessary for executing the program 4P.

The program (program product) including the program 4P may be provided in a non-transitory storage medium 4A readably recording the program. The storage unit 42 stores the program read from the recording medium 4A by a read-out device (not illustrated). The recording medium 4A is, for example, a magnetic disk, an optical disk, a semiconductor memory or the like. Moreover, the program may be downloaded from an external server connected to a communication network and may be stored in the storage unit 42. The program 4P may be constructed by a single computer program or multiple computer programs, or may be executed on a single computer or may be executed on computers interconnected over a communication network.

The communication unit 43 has a communication module for communicating with an external device through a network such as a LAN, the Internet or the like. The control unit 41 can transmit and receive various information to and from the data collection device 3 via the communication unit 43.

The display unit 44 has a display device such as, for example, a liquid crystal display or an organic EL (Electro Luminescence) display. The display unit 44 displays various information related to a film temperature predicted according to instructions from the control unit 41.

The operation unit 45 is an interface that receives an operation by the user. The operation unit 45 is provided with, for example, a touch panel device with a built-in display, a keyboard, a mouse, a speaker, a microphone and the like. The operation unit 45 receives an operation input from the user and sends a control signal according to the operation details to the control unit 41. The display unit 44 and the operation unit 45 are not necessarily provided.

The information processing apparatus 4 and the data collection device 3 are not limited to be configured as separate devices, but the information processing apparatus 4 may be integrated into the data collection device 3, for example. Note that the control device 16 may further function as the information processing apparatus 4.

<Display Device 5>

The display device 5 predicts a film temperature based on the molding information and displays information related to the predicted film temperature. The display device 5, which has a hardware configuration similar to that of the information processing apparatus 4, is a computer, though not illustrated or described in details, and is provided with a control unit, a storage unit, a communication unit, a display unit and an operation unit. The storage unit is provided with a non-volatile memory to store various programs and data including a control program for causing the computer to execute processing of predicting and displaying film temperatures. The display device 5 may be portable. Note that the information processing apparatus 4 may function as a display device 5.

<Prediction Method for Film Temperature>

The information processing apparatus 4 according to the present embodiment evaluates prediction values of film temperatures during molding in the casting process, the MD stretching process and the TD stretching process based on the measurement data acquired during molding in the film molding. That is, the information processing apparatus 4 predicts film temperatures during operation of the molding machine 1.

Though the film temperature may be predicted for a specific prediction point, a change in the film temperature, for example, may preferably be predicted. The change in the film temperature includes, for example, a temporal change, a positional change, a process change and the like. A film passing through a starting position of each of the processes moves in the direction of the flow as the process progresses, which increases a conveyance time and a conveyance amount (amount of the positional change). The temporal change is variation in the film temperature after the conveyance time elapses from the starting time point where the film passes through the starting position. The positional change is variation in film temperature with changes in the conveyance amount from the starting position. The process change is variation in film temperature with the degree of progress of the process. In the present embodiment, the temporal change of the film temperature is assumed to be predicted.

The information processing apparatus 4 predicts a film temperature using the temperature prediction model 42 that predicts a film temperature based on molding information including measurement data. The temperature prediction model 421 is a model that can predict in simulation a film temperature according to a set calculation condition of the molding information. The temperature prediction model 421 may be, for example, CAE (Computer Aided Engineering) analysis software.

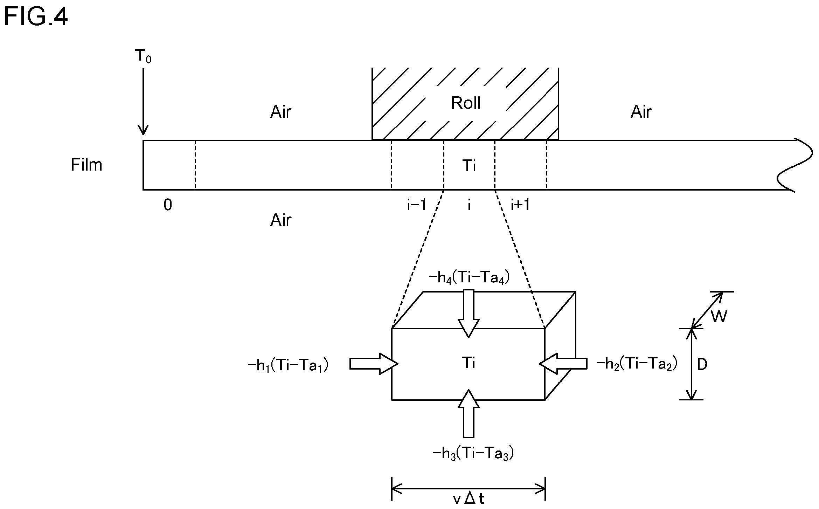

FIG. 4 is an explanatory view depicting a prediction method for the temperature prediction model 421. As illustrated in the upper part of FIG. 4, the temperature prediction model 421 develops a flow path in the molding machine 1 into a two-dimensional planar flow and divides the flow path between planar plates into elements to calculate an energy balance of heat transfer and heat generation at flow-in and flow-out between the elements. The temperature prediction model 421 predicts a film temperature at each element position by sequentially calculating an energy balance in each of the elements along the conveyance direction regarding an initial film position for each process as a conveyance start position.

FIG. 4 depicts the i-th element at the lower part. Since the heat generation associated with the change in film temperature inside the i-th element is equal to the sum of the heat transfer from the upper, lower, left, and right directions of the i-th element, and thus the energy balance inside the i-th element can be expressed by Equation (1) below.

$$\Delta \text{Ti} \ (\rho \times \text{Cp} \times \text{D} \times \text{W} \times \text{v} \ \Delta \ t) = -h_1(\text{Ti-Ta}_1) - h_2(\text{Ti-Ta}_2) - h_3(\text{Ti-Ta}_3) - h_4(\text{Ti-Ta}_4) \ldots (1)$$

Here, Ti is the film temperature at the i-th element, $\Delta$Ti is the amount of change in the film temperature, $\rho$ is the density of the film resin, Cp is the specific heat of the film resin, D is the film thickness, W is the film width, v is the film velocity, $\Delta$ t is the elapsed time, $h_1$ is a heat transfer rate on the left surface side of the element, $Ta_1$ is the temperature of the substance in contact with the left surface of the element, $h_2$ is a heat transfer rate on the right surface side of the element, $Ta_2$ is the temperature of the substance in contact with the right surface of the element, $h_3$ is a heat transfer rate on the bottom surface side of the element, $Ta_3$ is the temperature of the substance in contact with the bottom surface of the element, $h_4$ is a heat transfer rate on the top surface side of the element and $Ta_4$ is the temperature of the substance in contact with the top surface of the element.

Each element may further be divided into a thickness direction of the film. For example, by dividing each element into three at equal intervals in the thickness direction and analyzing them, three different film temperatures for the front, center, and back of the film may be predicted.

In the temperature prediction model, a conveyance time at a predetermined conveyance position is calculated based on the molding information, and the film temperature and the conveyance time are associated with each other to evaluate a temporal change of the film temperature. The temperature prediction model 421 is not limited to models using the aforementioned analysis method, but may employ any method that is able to predict the film temperature according to the molding information.

The information processing apparatus 4 acquires measurement data detected by the detection device 2 and provides the temperature prediction model 421 with the acquired measurement data as input.

The molding information as input to the temperature prediction model 421 may include operation data of the molding machine 1. The operation data included in the molding information includes, for example, a film velocity, a film discharge volume, film start position coordinates, film end position coordinates, position coordinates of the cast roll 121, position coordinates of the tension roll 131, a stretching factor, a stretching angle and the like. The operation data may further include various setting data determined according to the design of the molding machine 1 or the measurement data and other operation data. The operation data may be obtained from a control value by the control device 16 or may be obtained from sensor values of the actual operating situation detected by the detection devices 2. That is, the aforementioned examples of the operation data may be included in the measured data.

The molding information as input to the temperature prediction model 421 may also include the physical properties of resin. For example, the physical properties of the resin include thermal conductivity, specific heat, density and the like of resin. The physical properties of resin may be obtained by receiving input from the user, or may be obtained through a predetermined physical property database storing physical property information, for example.

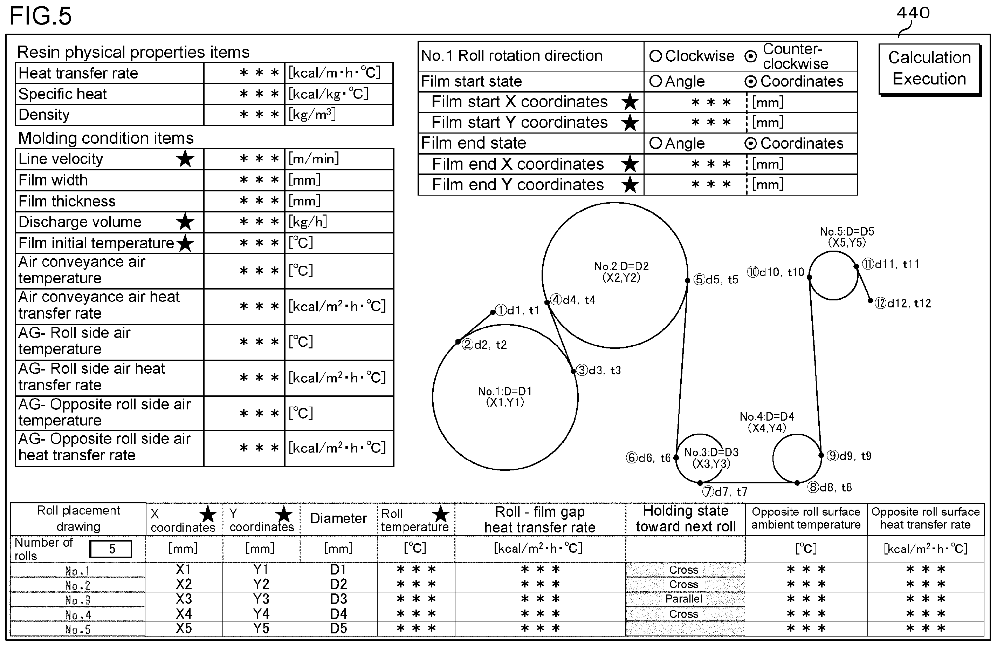

FIGs. 5 to 7 are schematic views depicting examples of a molding information setting screen 440 for the temperature prediction model 421. The setting screen 440 is a screen for setting a calculation condition for the molding information to be input to the temperature prediction model 421. The molding information used for predicting a temperature in each of the processes is specifically described with reference to FIGs 5 to 7.

FIG. 5 illustrates an example of a molding information setting screen related to a temperature prediction in the casting process. As illustrated in FIG. 5, the molding information to be used for predicting a film temperature in the casting process includes, for example, operation data related to a film velocity, a film discharge volume, a film start XY coordinates (outlet XY coordinates of the die 114), film end XY coordinates and XY coordinates of each of the cast rolls 121. The molding information further includes measurement data related to a film width, a film thickness, a film initial temperature (temperature near the starting position), a temperature of each of the cast rolls 121 and a heat transfer rate between each cast roll 121 and the film.

The molding information may further include setting data related to an air temperature when air conveyance is performed, a heat transfer rate of air, a roll diameter of each cast roll 121, a holding state toward the next cast roll 121, an ambient temperature of the opposite roll surface as well as a heat transfer rate of the opposite roll surface and resin physical properties. In the present specification, the roll surface refers to the surface of a film that is in contact with a roll, while the opposite roll surface refers to the surface of the film opposite to the aforementioned roll surface.

In FIG. 5, the black dots in the drawing illustrating the machine configuration correspond to predetermined passage positions, and a film is conveyed through the passage points in the order of the circled numbers. The circled numbers are displayed in association with a conveyance amount (the amount of change in position) from the starting position to each passage position and a conveyance time elapsed until the film passes through each passage position.

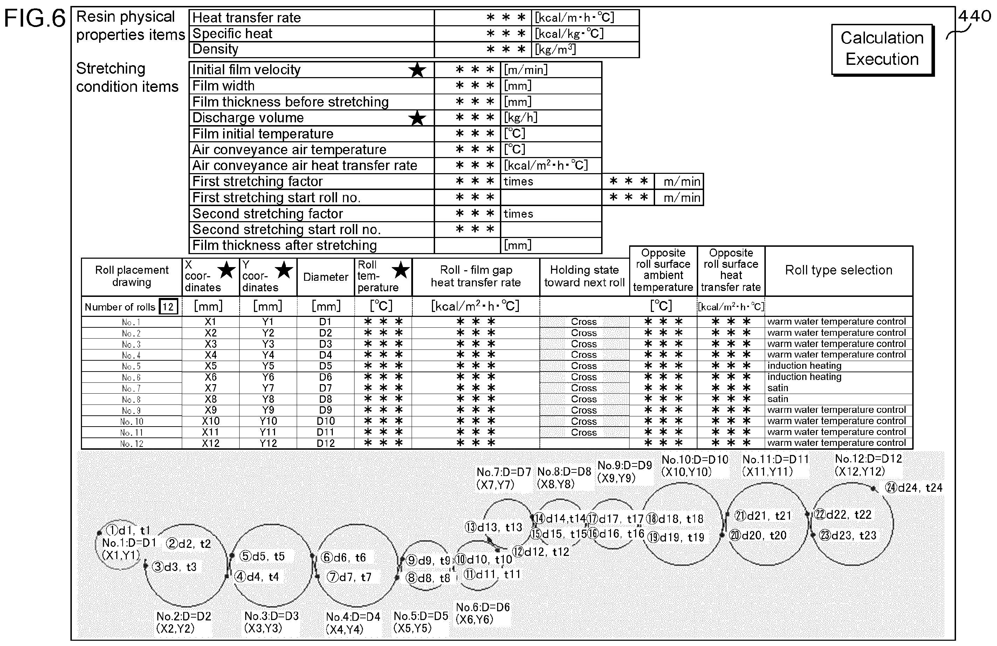

FIG. 6 illustrates an example of a molding information setting screen related to a temperature prediction in the MD stretching process. The molding information used for predicting a film temperature in the MD stretching process includes, for example, operation data related to an initial film velocity (velocity near the starting position), a film discharge volume, a stretching factor of first stretching, a film velocity after the first stretching, a stretching factor of second stretching, a film velocity after the second stretching and XY coordinates for each of the tension rolls 131. The molding information further includes a film width, a film thickness before the MD stretching, a film initial temperature (temperature near the starting position), a film thickness after the MD stretching, a temperature of each of the tension rolls 131 and measurement data related to the heat transfer rate between each of the tension rolls 131 and a film.

The molding information may further include setting data related to an air temperature when air conveyance is performed, a heat transfer rate of air, identification information of the tension rolls 131 that start the first stretching and the second stretching, a roll diameter of each of the tension rolls 131, a holding state toward the next tension roll 131, an ambient temperature of the opposite roll surface, a heat transfer rate of the opposite roll surface as well as a type or the like of the temperature adjustment part contained in each of the tension rolls 131 and resin physical properties.

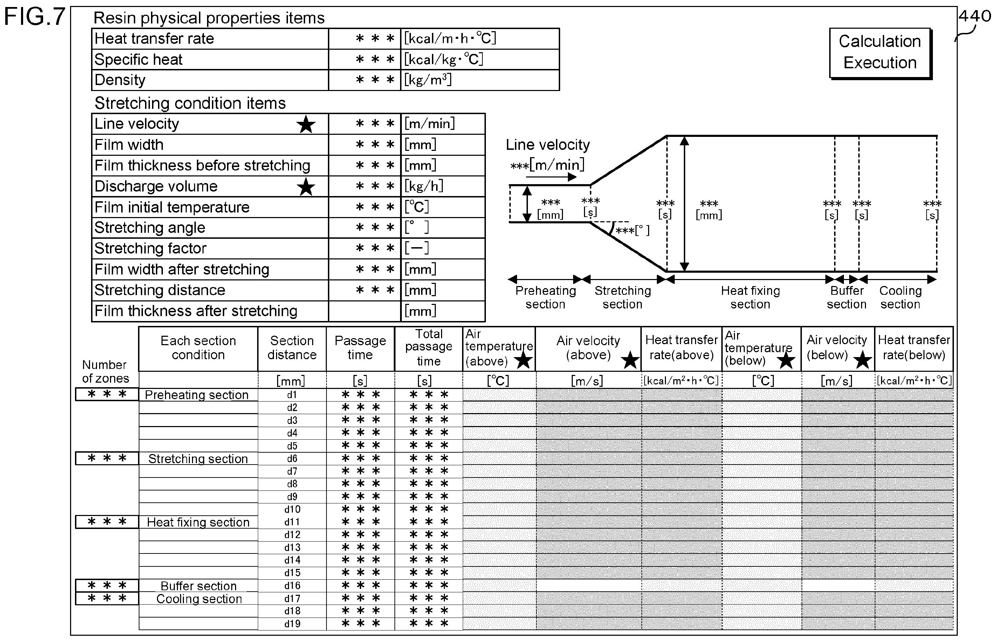

FIG. 7 illustrates an example of a molding information setting screen related to a temperature prediction in the TD stretching process. The molding information used for predicting a film temperature in the TD stretching process includes, for example, operation data related to a film velocity (line velocity), a film discharge volume, a stretching angle, a stretching factor and the like. The molding information further includes measurement data related to a film width, a film thickness before the TD stretching, a film initial temperature, a film thickness after the TD stretching, a temperature of air blown out of the hot air blower, a velocity of the air and the like. The temperature and velocity of air include the temperature and velocity above a film and the temperature and velocity below the film. The temperature and velocity of air may be detected for each of the sections in the case where the overall conveyance section of a film in the TD stretching process is divided at regular intervals in the film conveyance direction.

The molding information may further include setting data related to a film width after the TD stretching, a stretching distance, the number of sections, a distance of each section, a passage time, a total passage time as well as heat transfer rates above and below the film and resin physical properties.

Since the discharge volume of a film can be determined from the film velocity, film width, and film thickness, only three of the aforementioned four items may be used as required input items. Instead of acquiring the operation data related to the film velocity after the first stretching, the film velocity after the first stretching may be calculated from the initial film velocity and the stretching factor of the first stretching. Same applies to the film velocity after the second stretching. Instead of acquiring the measurement data related to the film thickness after the MD stretching, the film thickness after the MD stretching may be calculated from the initial film velocity and the stretching factors of the first stretching and the second stretching. The film thickness after the TD stretching may also be calculated from the film velocity and the stretching factor.

If acquiring sensor values during molding through the data collection device 3, the information processing apparatus 4 automatically inputs the acquired sensor values or calculation values obtained from the sensor values to each of the entry fields of the measurement data items on the setting screen 440. The information processing apparatus 4 further inputs physical properties of the resin used for molding to each of the entry fields of the resin physical properties items and inputs the operation data acquired by the control device 16 and the setting data of the molding machine 1 to each of the entry fields of the operation data items. The information processing apparatus 4 may directly input molding information to the temperature prediction model 421 without going through the setting screen 440. The temperature prediction model 421 predicts a film temperature based on the calculation conditions of the molding information input through the setting screen 440.

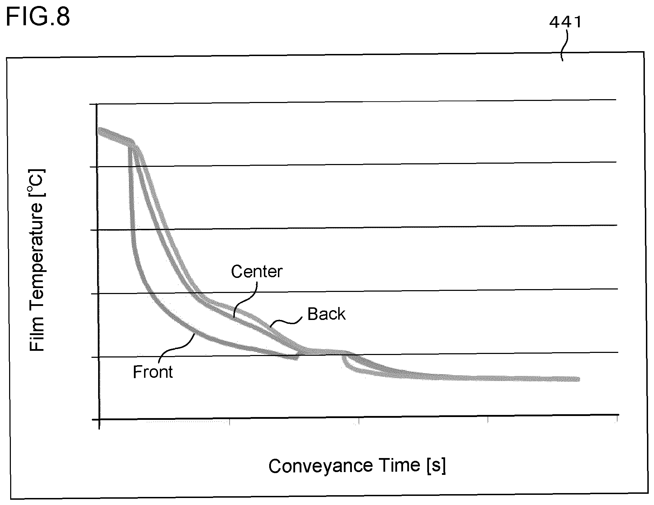

FIG. 8 is a schematic diagram depicting an example of a screen 441 illustrating a prediction result of the temperature prediction model 421. FIG. 8 depicts an example of the screen 441 indicating a prediction result of the film temperature in the casting process. The temperature prediction model 421 outputs a prediction value of the film temperature in correspondence with the conveyance time. The prediction result display screen 441 displays the prediction result of the film temperature in time series, including a graph indicating the film temperature on the vertical axis and the conveyance time on the horizontal axis.

The information processing apparatus 4 generates a graph displaying in time series a film temperature for each of the front, center and back of the film based on the prediction result of the temperature prediction model 421. The temperature prediction model 421 may be configured to predict a film temperature on any one of the front, center and back of the film. The information processing apparatus 4 displays a screen including the generated graph through the display unit 44. The predicted result of the temperature prediction model 421 may be a prediction value of the film temperature relative to the conveyance amount (changes in position) from the starting position of the casting process. Note that the setting screen 440 in FIG. 5 and the prediction result display screen 441 in FIG. 6 may be configured to be simultaneously displayed on the display unit 44, for example, displayed on a single screen side by side.

In the case of the MD stretching process, the temperature prediction model 421 predicts the temporal changes of film temperatures for the roll surface, center and opposite roll surface of the film during the MD stretching process. In the case of the TD stretching process, the temperature prediction model 421 predicts the temporal changes of film temperatures for the surface, center and back surface of the film during the TD stretching process.

When each process is completed, the information processing apparatus 4 predicts a film temperature in real time using the actual values of the molding information acquired during molding. The information processing apparatus 4 may predict a film temperature in the middle of each process. If making a prediction in the middle of the process, the information processing apparatus 4 may use the actual values during molding for molding information for which the actual values during molding has already been obtained and use estimation values or actual values in the past, as reference values, for molding information for which the actual values during molding has not been obtained, out of the molding information to be set. The information processing apparatus 4 displays the prediction results of the temperature prediction model 421 on the display unit 44 as needed. This allows the user to grasp prediction values of the film temperature according to the actual molding information during operation of the molding machine 1.

The setting screens 440 illustrated in FIGs. 5-7 may be configured to make the molding information items as input to the temperature prediction model 421 selectable. The information processing apparatus 4 receives designation as to whether or not input of each molding information is necessary by the user operating the operation unit 45 through the setting screen 440. The information processing apparatus 4 predicts a film temperature by using only the actual value of the molding information designated as necessary to be input to the temperature prediction model 421 as input. For molding information designated as unnecessary to be input, for example, reference values may be used, or a film temperature may be predicted without using the molding information designated as unnecessary to be input. The configuration described above allows the user to select data for which actual molding situation is to be reflected, improving customization for temperature prediction.

The information processing apparatus 4 may generate proposal information related to a proposal of the molding condition based on the obtained predicted value of the film temperature. The proposal information includes, for example, types of the molding information to be adjusted, recommended values of the molding information and the like to raise or lower the predicted film temperature. Having previously stored the correspondence between the molding information obtained from the past molding records and the film temperatures, for example, the information processing apparatus 4 can specify the proposal information based on the correspondence. In generating the proposal information, the information processing apparatus 4 may acquire a film temperature range to be satisfied and specify the proposal information satisfying the obtained film temperature range. The information processing apparatus 4 may receive the film temperature range to be satisfied by receiving an operation performed by the user operating the operation unit 45.

Moreover, by inputting changed values for part of the molding information and actual values during molding for the rest of the molding information to the temperature prediction model 421, the information processing apparatus 4 may predict a film temperature at a timing before change of the molding information. In the case where the prediction result satisfies a predetermined condition, the information processing apparatus 4 may transmit an instruction of changing the molding information to the control device 16. The information processing apparatus 4 may generate the aforementioned proposal information based on the obtained prediction results.

Though the information processing apparatus 4 is not limited to predict a film temperature for each process, it may predict a film temperature for the entire molding process, which is a unified process. The information processing apparatus 4 may be configured to acquire a prediction result of the film temperature for a single unified molding process, by the temperature prediction model 421, or to generate a prediction for the entire molding process by unifying the prediction results of the temperature prediction model 421 obtained for the respective processes.

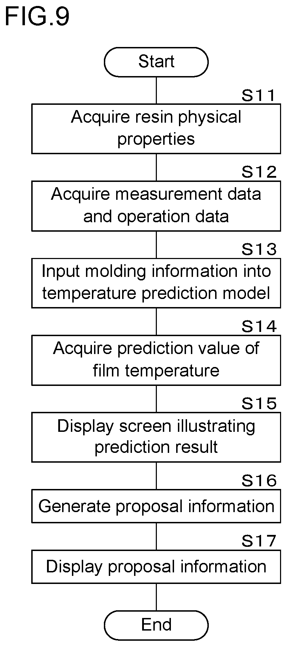

FIG. 9 is a flowchart depicting an example of a processing procedure to be executed by the information processing apparatus 4. The control unit 41 of the information processing apparatus 4 executes the following processing according to the program 4P stored in the storage unit 42. Though the casting process is described below by way of example, the control unit 41 may execute similar processing for the MD stretching process and the TD stretching process.

The control unit 41 starts the following processing after the end of the casting process or at a suitable timing during the casting process in the course of molding, for example. The control unit 41 may start the processing in response to the reception of a prediction request through the operation unit 45.

The control unit 41 of the information processing apparatus 4 acquires resin physical properties of the raw resin used for molding by referring to the physical property database stored in the storage unit 42, for example (step S11).

The control unit 41 acquires measurement data obtained during molding that is detected by the detection device 2 through the data collection device 3 and operation data obtained during molding that is transmitted from the control device 16 (step S12). The operation data may include design data obtained through the control device 16 or based on the known machine configuration. The control unit 41 may collectively acquire multiple types of molding information, or may individually acquire molding information at a timing when the molding information is detected.

The control unit 41 inputs molding information including the acquired physical property, measurement data and operation data to the temperature prediction model 421 (step S13). Specifically, the control unit 41 automatically inputs the acquired molding information into the input item fields illustrated in the setting screen 440 as described in FIG. 5 to provide the temperature prediction model 421 with the input data. In this case, the control unit 41 receives designation as to whether or not input to each molding information item is necessary by the user operating the operation unit 45 and may input only the actual values of the molding information designated as necessary to be input, to the temperature prediction model 421.

The control unit 41 acquires a prediction value of the film temperature output from the temperature prediction model 421 (step S14). The control unit 41 generates a screen illustrating a prediction result of the film temperature based on the acquired prediction value of the film temperature and displays the generated screen illustrating the prediction result on the display unit 44 (step S15). The control unit 41 generates a screen that graphically presents a temporal change of the film temperature, for example.

The control unit 41 generates proposal information related to the proposal of the molding condition based on the acquired prediction value of the film temperature (step S16). The proposal information includes, for example, the types of the molding information to be adjusted, recommended values for the molding information and the like. The control unit 41 displays a screen illustrating the generated proposal information on the display unit 44 (step S17). The control unit 41 may display a screen where the prediction result and the proposal information are simultaneously displayed on the display unit 44. The control unit 41 ends the processing. The control unit 41 may return the processing to step S12, acquire the newly detected molding information and predict a film temperature again using the newly acquired molding information. The steps S 16 and S17 are not necessarily performed.

Though in the description above, an example where the information processing apparatus 4 executes a series of processing was described, the display device 5 may also perform similar processing to predict and display a film temperature.

According to the present embodiment, by having multiple detection devices 2 in the molding machine system 100, molding information during molding can be acquired in real time. By using the acquired molding information, a film temperature during molding can accurately be predicted. Prediction of a film temperature can be performed in real time during the molding processes of a film, not before molding based on the reference values having been acquired in advance.

Since the actual molding situation can be reflected on prediction of a film temperature, the prediction accuracy is improved in comparison with the case where only the actual values obtained in the past and estimated values are used for predicting a film temperature. In the film molding, resin is melted and molded, so that the state of the resin changes in various ways. Moreover, multiple processes are included. Therefore, it is highly likely that the actual molding information changes depending on the state of the molding machine 1 and the resin for each molding, so that a prediction value may be deviated from the temperature behavior predicted before molding. By making predictions during film molding, film temperatures during molding can more accurately be grasped.

By predicting the change in the film temperature, the behavior of the film temperature moving through the flow path can be grasped. By using the temperature prediction model 421, a film temperature can be predicted efficiently and accurately.

(Second Embodiment)

The second embodiment describes a configuration of estimating a molding condition satisfying a desired film temperature using an estimation model. The difference from the first embodiment is mainly described below, and components corresponding to those in the first embodiment will be denoted by the same reference codes and will not be described in detail here.

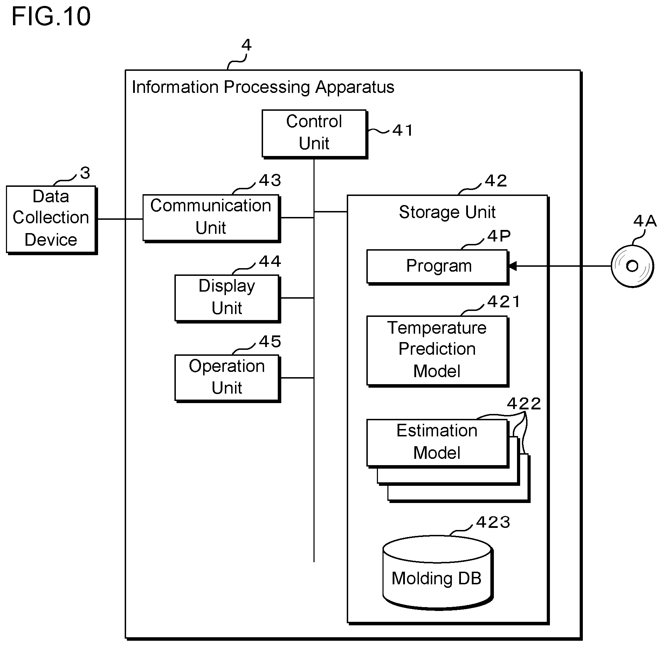

FIG. 10 is a block diagram illustrating an example of the configuration of the information processing apparatus 4 according to the second embodiment. The information processing apparatus 4 according to the second embodiment corresponds to an estimation device that estimates a molding condition of the molding machine 1 satisfying a desired film temperature. The molding condition corresponds to molding information as targets to be adjusted by the condition setting work out of the molding information.

The storage unit 42 of the information processing apparatus 4 stores an estimation model 422 and a molding DB (Data Base) 423 in addition to a program 4P for causing the computer to execute molding condition estimation processing and the aforementioned temperature prediction model 421.

The molding DB 423 is a database storing the molding information in the film temperature prediction processing using the temperature prediction model 421 and prediction results of the film temperature. The molding DB 423 stores a record where multiple types of molding information are associated with information such as prediction values of the film temperatures.

The display device 5 of the second embodiment also stores the information corresponding to the estimation model 422 and the molding DB 423 in the storage unit.

The information processing apparatus 4 collects prediction results of the film temperatures obtained by performing the prediction processing described in the first embodiment and molding information as calculation conditions for the molding processes conducted under various conditions and accumulates them in the molding DB 423. The information processing apparatus 4 according to the second embodiment may generate data by executing the film temperature prediction processing after the completion of the molding processes based on the molding information acquired during molding and may accumulate the information in the molding DB 423. The information processing apparatus 4 uses the information stored in the molding DB 423 as training data to generate the estimation model 422.

<Estimation Model 422>

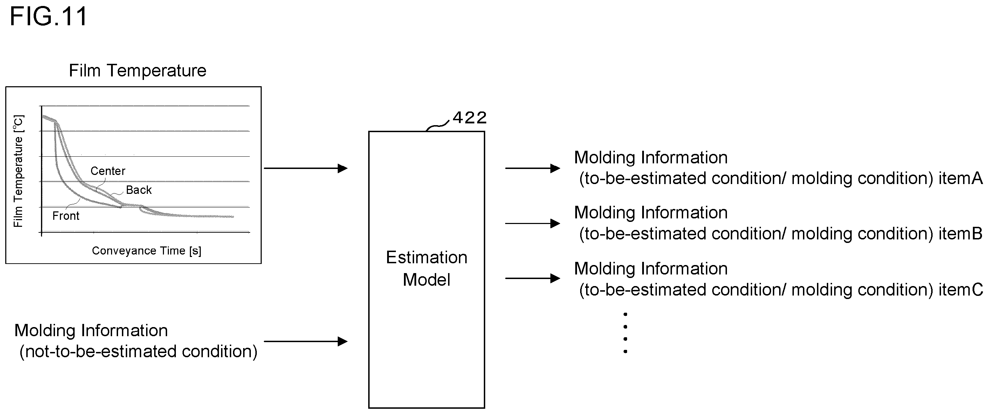

FIG. 11 is an explanatory view depicting the outline of the estimation model 422. The estimation model 422 estimates a molding condition of the molding machine 1 for the film temperature. The molding condition estimated by the estimation model 422 includes, for example, the molding conditions to be set, in advance, before or during operation of the molding machine 1. The items of the molding condition to be estimated by the estimation model 422 correspond to the items of the molding information as input to the above-mentioned temperature prediction model 421 and include, for example, measurement data, operation data and resin physical properties.

The estimation model 422 according to the present embodiment is a model that outputs information indicating a molding condition of the molding machine 1 when a film temperature is input, and is a machine learning model learned predetermined training data. The estimation model 422 is a model constructed by a deep learning method using neural networks, for example. In the case of acquiring time-series data, the estimation model 422 may be a recurrent neural network (RNN). The estimation model 422 is a machine learning model learned predetermined training data. The estimation model 422 is expected to be used as a program module that is part of artificial intelligence software.

The estimation model 422 has an input layer for inputting a film temperature, an intermediate layer (hidden layer) for extracting features of the film temperature and an output layer for outputting a molding condition. The intermediate layer has multiple nodes for extracting features of the input data and passes the features extracted using various parameters to the output layer. If a film temperature is input to the input layer, arithmetic operation is performed in the intermediate layer with trained parameters, and information indicating a molding condition is output from the output layer.

The film temperature to be input to the input layer of the estimation model 422 may be a temperature at a predetermined conveyance time point, or may be data indicating a change in the film temperature such as a change in the film temperature relative to a predetermined conveyance time, a change in the film temperature relative to a predetermined conveyance amount or the like. The film temperature input to the input layer of the estimation model 422 may be an amount of change in the film temperature. If the change in the film temperature is used as input, the film temperature input to the input layer may be input as image data that graphically depicts the time-series temperature data.

The output layer of the estimation model 422 has multiple nodes corresponding to multiple items related to the molding condition. The node corresponding to each of the molding condition items outputs a value indicating the molding condition. The configuration of the output layer is not limited to a particular one as long as a molding condition to be estimated can be obtained.

In the present embodiment, as illustrated in FIG. 11, multiple types of molding information including the aforementioned measurement data, operation data and resin properties are classified into a to-be-estimated condition and a not-to-be-estimated condition (molding condition), and only the to-be-estimated condition is estimated by the estimation model 422. The not-to-be-estimated condition are used as input data to the estimation model 422. The multiple molding information is classified depending on the need for estimation to thereby obtain the estimation model 422 that efficiently and accurately estimates a desired molding condition. It should be noted that the estimation model 422 may be configured not to use the not-to-be-estimated condition as input data. The estimation model 422 may be configured to regard all the multiple types of molding information described above as the not-to-be estimated condition.

The to-be-estimated condition in the casting process includes, for example, a film velocity, a film discharge volume, a film initial temperature, film start XY coordinates, film end XY coordinates, XY coordinates of each of the cast rolls 121 and a temperature of each of the cast rolls 121 and the like. Assuming that the film thickness is constant, the discharge volume is determined depending on the film velocity, so that the discharge volume may be excluded from the to-be-estimated condition.

The to-be-estimated condition in the MD stretching process includes, for example, an initial film velocity, a film discharge volume, XY coordinates of each of the tension rolls 131 and a temperature of each of the tension rolls 131 and the like.

The to-be-estimated condition in the TD stretching process includes, for example, an initial film velocity, a film discharge volume, an air temperature, an air velocity and the like.

In FIGs. 5 to 7, the molding information that is denoted with a black star in the molding information item name of the molding information item refers to a to-be-estimated condition. The molding information that is not denoted with a black star corresponds to a not-to-be-estimated condition.

In the present embodiment, the aforementioned estimation model 422 is prepared for each process. The storage unit 42 of the information processing apparatus 4 includes the estimation model 422 for estimating the molding condition related to the casting process, the estimation model 422 for estimating the molding condition related to the MD stretching process, and the estimation model 422 for estimating the molding condition related to the TD stretching process.

The configuration of the estimation model 422 is not limited to the example illustrated in FIG. 11. The estimation model 422 may only be able to identify the molding condition relative to the film temperature. The estimation model 422 may be a model based on other learning algorithms such as, for example, Transformer, CNN (Convolution Neural Network), LSTM (Long Short-Term Memory), SVM (Support Vector Machine), decision trees and the like. The estimation model 422 is not limited to machine learning models, but may be ones deriving a molding condition by a rule-based method or a specific mathematical formula.

The estimation model 422 can be generated by preparing training data including a film temperature as well as a not-to-be estimated condition and a label indicating a to-be estimated condition in association with each other and machine-training an untrained neural network with the training data.

Generally, in the condition setting work, a film temperature is predicted using the actual values in the past and the estimated values as calculation conditions, and the molding condition is adjusted so that the predicted film temperature satisfies a desired temperature. In the film molding, however, resin is melted and molded, so that the state of the resin changes in various ways. Furthermore, multiple processes are included. Accordingly, in the actual molding process, the molding information is highly likely not to comply with the actual values in the past or the estimated values, and thus data that can properly present the state of the actual molding process has not been sufficiently obtained in practice.

In the present embodiment, the multiple detection devices 2 are provided in the molding machine system 100 to thereby acquire in real time the molding information including the molding condition during molding. Using the acquired molding information, the film temperature during molding is predicted. By training the estimation model 422 with training data generated using the predicted film temperature (predicted film temperature) and the molding condition, the estimation model 422 can be generated that optimally estimates the molding condition responding to the film temperature to be required (required film temperature).

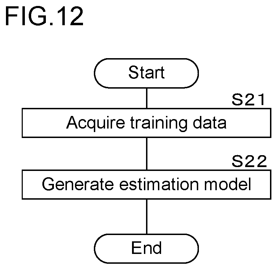

FIG. 12 is a flowchart depicting an example of a processing procedure for generating the estimation model 422. The control unit 41 of the information processing apparatus 4 executes the following processing according to the program 4P stored in the storage unit 42.

The control unit 41 of the information processing apparatus 4 acquires training data based on the information stored in the molding DB 423 (step S21). The training data is a data set obtained by providing a film temperature and a not-to-be-estimated condition with a to-be-estimated condition. The control unit 41 acquires multiple data sets as training data.

The control unit 41 generates the estimation model 422 that outputs a to-be-estimated condition (molding condition) when a film temperature and a not-to-be-estimated condition are input based on the acquired training data (step S22).

Specifically, the control unit 41 inputs multiple film temperatures and not-to-be-estimated conditions included in the training data as input data to the estimation model 422, and obtains to-be-estimated conditions output from the estimation model 422. The control unit 41 calculates the errors between the output to-be-estimated conditions and the to-be-estimated conditions included in the training data, i.e., the to-be-estimated conditions as correct values by a predetermined loss function. The control unit 41 adjusts parameters such as weights between nodes using, for example, a backpropagation method to optimize (minimize or maximize) the loss function. Before start of the training, the definition information describing the estimation model 422 is assumed to be given default values. When the training is completed by the error or the number of training satisfying a predetermined criteria, the optimized parameters can be obtained. After completion of the training, the control unit 41 stores, as the trained estimation model 422, the definition information related to the trained estimation model 422 in the storage unit 42 and ends the series of processing.

The control unit 41 executes the aforementioned processing by using the film temperature and the molding condition related to each of the casting process, the MD stretching process and the TD stretching process. This makes it possible to build three estimation models 422 that suitably estimate a molding condition corresponding to the film temperature related to the casting process, a molding condition corresponding to the film temperature related to the MD stretching process and a molding condition coresponding to the film temperature related to the TD stretching process.

In the case where the molding machine system 100 includes multiple molding machines 1, the estimation model 422 is preferably generated for each molding machine 1. The information processing apparatus 4 generates an estimation model 422 corresponding to each of the molding machines 1 using the training data including the molding conditions obtained for each of the molding machines 1.

The estimation model 422 is not limited to be generated and trained by the information processing apparatus 4. The estimation model 422 may be obtained by a model trained on an external server (not illustrated) being transmitted to the information processing apparatus 4 and stored in the storage unit 42. The estimation model 422 may be generated on an external server and trained by the information processing apparatus 4.

The estimation model 422 is not limited to a model built for each of the processes, but may be a single estimation model 422 estimating a molding condition for the entire molding process obtained by unifying the processes. In this case, the temperature prediction model 421 may predict a film temperature for the entire unified molding process.

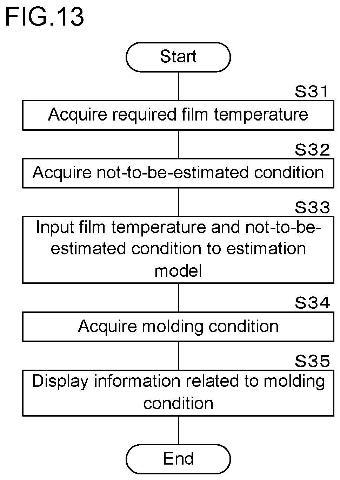

The information processing apparatus 4 estimates a molding condition using the aforementioned estimation model 422. FIG. 13 is a flowchart depicting an example of a procedure for the molding condition estimation processing.

The control unit 41 of the information processing apparatus 4 acquires a film temperature that is required for a film to be molded by the molding machine 1 in response to receiving an operation by the user through the operation unit 45 (step S31). The film temperature required for a film is, for example, a film temperature set by the operator as a target value for the film temperature formed by the molding machine 1. The film temperature may be, for example, a film temperature at a specific conveyance time point, a change in the film temperature at a predetermined conveyance time and a change amount of the film temperature. The control unit 41 may acquire a graph representing a change of the film temperature.

The control unit 41 acquires a not-to-be-estimated condition including a resin physical property, measurement data, operation data and the like (step S32). The not-to-be-estimated condition may be acquired, for example, by receiving an operation performed on the operation unit 45 by the user, acquired through the physical property database storing the resin physical properties of various resins, or acquired through communication with an external device. At steps S31 and S32, the control unit 41 may display a reception screen for an estimation condition on the display unit 44, for example, and receive input from the user using the reception screen.

The control unit 41 inputs the acquired film temperature and not-to-be-estimated condition to the estimation model 422 (step S33). The control unit 41 acquires a molding condition output from the estimation model 422 (step S34). The molding condition output from the estimation model 422 is the to-be-estimated condition. The control unit 41 inputs input data to the estimation models 422 corresponding to the respective processes and estimates a molding condition for each process.

The control unit 41 displays the information related to the acquired molding condition on the display unit 44 (step S35) and ends the series of processing. For example, the control unit 41 generates a screen that displays the result of estimating molding conditions and the film temperatures as the estimation conditions, and displays the generated screen on the display unit 44.

According to the present embodiment, a molding condition satisfying the required film temperature can suitably be estimated using the estimation model 422, which facilitates a condition setting work. The estimation model 422 is trained with training data including the actual value of the molding information during molding and the prediction value of the film temperature to thereby estimate a molding condition complying with the actual status of the molding machine 1 with high accuracy by taking the molding information during molding into consideration.

The estimation model 422, which is a machine learning model, is used to thereby facilitate optimization of the molding condition for the molding conditions of the film molding processes where various molding conditions influence each other.

In order to build the estimation model 422 with high accuracy, acquisition of multiple training data with high quality is critical, and thus, use of the data obtained by the film temperature prediction processing relative to the molding condition enables efficient acquisition of training data.

Concerning the above-mentioned embodiments, the following clauses are further disclosed.

Clause 1

A molding condition estimation method causing a computer to execute processing of:

acquiring a film temperature (required film temperature) required for a film to be molded by a film molding machine; and estimating a molding condition satisfying the acquired film temperature (required film temperature) by using an estimation model for estimating a molding condition responding to a film temperature, the estimation model built based on molding information during molding that is detected by a detection device and a film temperature (predicted film temperature) predicted from the molding information, the molding information indicates a state of a film molding machine performing extrusion molding or a state of a film being molded by the film molding machine.

Clause 2

The molding condition estimation method according to clause 1, wherein estimating the molding condition comprises inputting the acquired film temperature to the estimation model trained to output a molding condition when a film temperature is input.

Clause 3

The molding condition estimation method according to clause 1 or 2, wherein by using a temperature prediction model that predicts a film temperature based on molding information, a film temperature according to molding information is predicted.

Clause 4

The molding condition estimation method according to any one of clauses 1 to 3, wherein the molding condition satisfying the film temperature in a casting process, an MD stretching process or a TD stretching process is estimated.

Clause 5

The molding condition estimation method according to any one of clauses 1 to 4, wherein the molding condition is estimated including at least one of a film velocity, a film discharge volume, a film temperature, film position coordinates, roll position coordinates and a roll temperature in a casting process.

Clause 6

The molding condition estimation method according to any one of clauses 1 to 5, wherein the molding condition is estimated including at least one of a film velocity, a film discharge volume, roll position coordinates and a roll temperature in an MD stretching process.

Clause 7

The molding condition estimation method according to any one of clauses 1 to 6, wherein the molding condition is estimated including at least one of a film velocity, a film discharge volume, an air temperature and an air velocity in a TD stretching process.

The embodiments disclosed herein are illustrative in all respects, and should be considered not to be restrictive. Technical characteristics described in the respective embodiments can be combined with each other, and the scope of the invention is intended to include all modifications within a scope of the appended claims and a scope equivalent to the scope of the appended claims. The sequence shown in each embodiment is not limited, and to the extent that there is no conflict, each processing procedure may be performed in a different order, or multiple processes may be performed in parallel. The processing entity of each processing is not limited, and the processing of each device may be executed by another device within the scope of consistency.

The matters described in each embodiment can be combined with each other. In addition, independent claims and dependent claims stated in the scope of claims can be combined with each other in any combination, regardless of the citation format. In addition, the scope of claims uses the form of describing claims that depend on two or more other claims (multi-claim format), though not limited to this form. The scope of claims uses the form of describing multiple claims that depend from at least one multiple claims (multi-multi claims).

Reference Signs List

100    molding machine system
1      film molding machine
11     extruder
12     casting device
121    cast roll

| 13 | MD stretcher |
| 131 | tension roll |
| 14 | TD stretcher |
| 15 | winder |
| 16 | control device |
| 2 | detection device |
| 21 | first sensor |
| 22 | second sensor |
| 23 | third sensor |
| 3 | data collection device |
| 31 | control unit |
| 32 | storage unit |
| 33 | communication unit |
| 34 | data input unit |
| 4 | information processing apparatus (estimation device) |
| 41 | control unit |
| 42 | storage unit |
| 43 | communication unit |
| 44 | display unit |
| 45 | operation unit |
| 4A | recording medium |
| 4P | program |
| 421 | temperature prediction model |
| 422 | estimation model |
| 5 | display device |

**Claims**

1. A molding condition estimation method causing a computer to execute processing of:

   acquiring a film temperature required for a film to be molded by a film molding machine; and
   estimating a molding condition satisfying the acquired film temperature by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine.

2. The molding condition estimation method according to claim 1, wherein estimating the molding condition comprises inputting the acquired film temperature to the estimation model trained to output a molding condition when a film temperature is input.

3. The molding condition estimation method according to claim 1 or 2, wherein by using a temperature prediction model that predicts a film temperature based on molding information, a film temperature according to molding information is predicted.

4. The molding condition estimation method according to claim 1 or 2, wherein the molding condition is estimated satisfying the film temperature in a casting process, an MD stretching process or a TD stretching process.

5. The molding condition estimation method according to claim 1 or 2, wherein the molding condition is estimated including at least one of a film velocity, a film discharge volume, a film temperature, film position coordinates, roll position coordinates and a roll temperature in a casting process.

6. The molding condition estimation method according to claim 1 or 2, wherein the molding condition is estimated including at least one of a film velocity, a film discharge volume, roll position coordinates and a roll temperature in an MD stretching process.

7. The molding condition estimation method according to claim 1 or 2, wherein the molding condition is estimated including at least one of a film velocity, a film discharge volume, an air temperature and an air velocity in a TD stretching process.

8. A program causing a computer to execute processing of:

acquiring a film temperature required for a film to be molded by a film molding machine; and
estimating a molding condition satisfying the acquired film temperature by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine.

9. An estimation device, comprising:

an acquisition unit that acquires a film temperature required for a film to be molded by a film molding machine; and
an estimation unit that estimates a molding condition satisfying the film temperature acquired at the acquisition unit by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine.

10. A display device, comprising:

an acquisition unit that acquires a film temperature required for a film to be molded by a film molding machine;
an estimation unit that estimates a molding condition satisfying the film temperature acquired at the acquisition unit by using an estimation model for estimating a molding condition responding to a film temperature, the estimation model built based on molding information during molding that is detected by a detection device and a film temperature predicted from the molding information, the molding information indicates a state of a film molding machine performing extrusion molding or a state of a film being molded by the film molding machine; and
a display unit that displays information related to the estimated molding condition.

11. A learning model generation method, comprising:

acquiring training data including molding information during molding that is detected by a detection device and that indicates a state of a film molding machine performing extrusion molding or a state of a film molded by the film molding machine and a film temperature predicted from the molding information; and
generating a learning model trained to output a molding condition when a film temperature is input based on the acquired training data.

FIG.1

EP 4 628 280 A1

FIG.2

FIG.3

Information Processing Apparatus 4

Control Unit 41

Data Collection Device 3

Communication Unit 43

Display Unit 44

Operation Unit 45

Storage Unit 42

Program 4P

Temperature Prediction Model 421

4A

FIG.4

$T_0$

Air    Roll    Air

Film

Ti

0    Air    i-1    i    i+1

$-h_4(Ti-Ta_4)$

$-h_1(Ti-Ta_1)$    Ti    $-h_2(Ti-Ta_2)$

W

D

$-h_3(Ti-Ta_3)$

$v \Delta t$

EP 4 628 280 A1

# FIG.5

Resin physical properties items

| Heat transfer rate | * * * | [kcal/m·h·°C] |
|---|---|---|
| Specific heat | * * * | [kcal/kg·°C] |
| Density | * * * | [kg/m³] |

Molding condition items

| Line velocity ★ | * * * | [m/min] |
|---|---|---|
| Film width | * * * | [mm] |
| Film thickness | * * * | [mm] |
| Discharge volume ★ | * * * | [kg/h] |
| Film initial temperature ★ | * * * | [°C] |
| Air conveyance air temperature | * * * | [°C] |
| Air conveyance air heat transfer rate | * * * | [kcal/m²·h·°C] |
| AG- Roll side air temperature | * * * | [°C] |
| AG- Roll side air heat transfer rate | * * * | [kcal/m²·h·°C] |
| AG- Opposite roll side air temperature | * * * | [°C] |
| AG- Opposite roll side air heat transfer rate | * * * | [kcal/m²·h·°C] |

| No.1 Roll rotation direction | ○ Clockwise ⊙ Counter-clockwise | |
|---|---|---|
| Film start state | ○ Angle ⊙ Coordinates | |
| Film start X coordinates ★ | * * * | [mm] |
| Film start Y coordinates ★ | * * * | [mm] |
| Film end state | ○ Angle ⊙ Coordinates | |
| Film end X coordinates ★ | * * * | [mm] |
| Film end Y coordinates ★ | * * * | [mm] |

Calculation Execution

| Roll placement drawing | X coordinates ★ | Y coordinates ★ | Diameter | Roll temperature ★ | Roll - film gap heat transfer rate | Holding state toward next roll | Opposite roll surface ambient temperature | Opposite roll surface heat transfer rate |
|---|---|---|---|---|---|---|---|---|
| Number of rolls [5] | [mm] | [mm] | [mm] | [°C] | [kcal/m²·h·°C] | | [°C] | [kcal/m²·h·°C] |
| No.1 | X1 | Y1 | D1 | * * * | * * * | Cross | * * * | * * * |
| No.2 | X2 | Y2 | D2 | * * * | * * * | Cross | * * * | * * * |
| No.3 | X3 | Y3 | D3 | * * * | * * * | Parallel | * * * | * * * |
| No.4 | X4 | Y4 | D4 | * * * | * * * | Cross | * * * | * * * |
| No.5 | X5 | Y5 | D5 | * * * | * * * | | * * * | * * * |

EP 4 628 280 A1

**FIG.6**

| Resin physical properties items | Heat transfer rate | * * * | [kcal/m·h·°C] |
|---|---|---|---|
| | Specific heat | * * * | [kcal/kg·°C] |
| | Density | * * * | [kg/m³] |

| Stretching condition items | | | |
|---|---|---|---|
| Initial film velocity ★ | * * * | [m/min] | |
| Film width | * * * | [mm] | |
| Film thickness before stretching | * * * | [mm] | |
| Discharge volume ★ | * * * | [kg/h] | |
| Film initial temperature | * * * | [°C] | |
| Air conveyance air temperature | * * * | [°C] | |
| Air conveyance air heat transfer rate | * * * | [kcal/m²·h·°C] | |
| First stretching factor | * * * | times | * * * m/min |
| First stretching start roll no. | * * * | | * * * m/min |
| Second stretching factor | * * * | times | |
| Second stretching start roll no. | * * * | | |
| Film thickness after stretching | | [mm] | |

Calculation Execution

440

| Roll placement drawing | X coor-dinates ★ | Y coor-dinates ★ | Diameter | Roll tem-perature ★ | Roll - film gap heat transfer rate | Holding state toward next roll | Opposite roll surface ambient temperature | Opposite roll surface heat transfer rate | Roll type selection |
|---|---|---|---|---|---|---|---|---|---|
| Number of rolls 12 | [mm] | [mm] | [mm] | [°C] | [kcal/m²·h·°C] | | [°C] | [kcal/m²·h·°C] | |
| No.1 | X1 | Y1 | D1 | * * * | * * * | Cross | * * * | * * * | warm water temperature control |
| No.2 | X2 | Y2 | D2 | * * * | * * * | Cross | * * * | * * * | warm water temperature control |
| No.3 | X3 | Y3 | D3 | * * * | * * * | Cross | * * * | * * * | warm water temperature control |
| No.4 | X4 | Y4 | D4 | * * * | * * * | Cross | * * * | * * * | warm water temperature control |
| No.5 | X5 | Y5 | D5 | * * * | * * * | Cross | * * * | * * * | induction heating |
| No.6 | X6 | Y6 | D6 | * * * | * * * | Cross | * * * | * * * | induction heating |
| No.7 | X7 | Y7 | D7 | * * * | * * * | Cross | * * * | * * * | satin |
| No.8 | X8 | Y8 | D8 | * * * | * * * | Cross | * * * | * * * | satin |
| No.9 | X9 | Y9 | D9 | * * * | * * * | Cross | * * * | * * * | warm water temperature control |
| No.10 | X10 | Y10 | D10 | * * * | * * * | Cross | * * * | * * * | warm water temperature control |
| No.11 | X11 | Y11 | D11 | * * * | * * * | Cross | * * * | * * * | warm water temperature control |
| No.12 | X12 | Y12 | D12 | * * * | * * * | | * * * | * * * | warm water temperature control |

No.7:D=D7 (X7,Y7)　No.8:D=D8 (X8,Y8)　No.9:D=D9 (X9,Y9)　No.10:D=D10 (X10,Y10)　No.11:D=D11 (X11,Y11)　No.12:D=D12 (X12,Y12)

⑭d14,t14 ⑰d17, t17 ⑱d18, t18　㉑d21, t21　㉒d22, t22　㉔d24, t24
⑬d13, t13 ⑮d15, t15 ⑯d16, t16 ⑲d19, t19 ⑳d20, t20　㉓d23, t23

①d1, t1
No.1:D=D1 (X1,Y1)　②d2, t2 ③d3, t3　⑤d5, t5 ④d4, t4　⑥d6, t6 ⑦d7. t7　⑨d9, t9 ⑧d8, t8　⑩d10, t10 ⑪d11, t11　⑫d12, t12

No.2:D=D2 (X2,Y2)　No.3:D=D3 (X3,Y3)　No.4:D=D4 (X4,Y4)　No.5:D=D5 (X5,Y5)　No.6:D=D6 (X6,Y6)

EP 4 628 280 A1

# FIG.7

EP 4 628 280 A1

440

**Resin physical properties items**

| | | |
|---|---|---|
| Heat transfer rate | * * * | [kcal/m·h·°C] |
| Specific heat | * * * | [kcal/kg·°C] |
| Density | * * * | [kg/m³] |

**Stretching condition items**

| | | | |
|---|---|---|---|
| Line velocity | ★ | * * * | [m/min] |
| Film width | | * * * | [mm] |
| Film thickness before stretching | | * * * | [mm] |
| Discharge volume | ★ | * * * | [kg/h] |
| Film initial temperature | | * * * | [°C] |
| Stretching angle | | * * * | [° ] |
| Stretching factor | | * * * | [—] |
| Film width after stretching | | * * * | [mm] |
| Stretching distance | | * * * | [mm] |
| Film thickness after stretching | | | [mm] |

Calculation Execution

Line velocity ***[m/min]

Preheating section | Stretching section | Heat fixing section | Buffer section | Cooling section

| Number of zones | Each section condition | Section distance [mm] | Passage time [s] | Total passage time [s] | Air temperature (above) ★ [°C] | Air velocity (above) ★ [m/s] | Heat transfer rate(above) [kcal/m²·h·°C] | Air temperature (below) ★ [°C] | Air velocity (below) ★ [m/s] | Heat transfer rate(below) [kcal/m²·h·°C] |
|---|---|---|---|---|---|---|---|---|---|---|
| * * * | Preheating section | d1 | * * * | * * * | | | | | | |
| | | d2 | * * * | * * * | | | | | | |
| | | d3 | * * * | * * * | | | | | | |
| | | d4 | * * * | * * * | | | | | | |
| | | d5 | * * * | * * * | | | | | | |
| * * * | Stretching section | d6 | * * * | * * * | | | | | | |
| | | d7 | * * * | * * * | | | | | | |
| | | d8 | * * * | * * * | | | | | | |
| | | d9 | * * * | * * * | | | | | | |
| | | d10 | * * * | * * * | | | | | | |
| * * * | Heat fixing section | d11 | * * * | * * * | | | | | | |
| | | d12 | * * * | * * * | | | | | | |
| | | d13 | * * * | * * * | | | | | | |
| | | d14 | * * * | * * * | | | | | | |
| | | d15 | * * * | * * * | | | | | | |
| * * * | Buffer section | d16 | * * * | * * * | | | | | | |
| * * * | Cooling section | d17 | * * * | * * * | | | | | | |
| | | d18 | * * * | * * * | | | | | | |
| | | d19 | * * * | * * * | | | | | | |

## FIG.8

441

Film Temperature [°C]

Center

Back

Front

Conveyance Time [s]

# FIG.9

```
        ┌─────────────┐
        │    Start     │
        └──────┬──────┘
               │          S11
    ┌──────────┴──────────┐
    │ Acquire resin physical │
    │      properties       │
    └──────────┬──────────┘
               │          S12
    ┌──────────┴──────────┐
    │ Acquire measurement data │
    │   and operation data    │
    └──────────┬──────────┘
               │          S13
    ┌──────────┴──────────┐
    │ Input molding information into │
    │ temperature prediction model │
    └──────────┬──────────┘
               │          S14
    ┌──────────┴──────────┐
    │ Acquire prediction value of │
    │      film temperature      │
    └──────────┬──────────┘
               │          S15
    ┌──────────┴──────────┐
    │ Display screen illustrating │
    │      prediction result     │
    └──────────┬──────────┘
               │          S16
    ┌──────────┴──────────┐
    │ Generate proposal information │
    └──────────┬──────────┘
               │          S17
    ┌──────────┴──────────┐
    │ Display proposal information │
    └──────────┬──────────┘
               │
        ┌──────┴──────┐
        │     End     │
        └─────────────┘
```

FIG.10

# FIG.11

Film Temperature

Molding Information
(not-to-be-estimated condition) →

→ 422

Estimation
Model

→ Molding Information
(to-be-estimated condition/ molding condition) itemA

→ Molding Information
(to-be-estimated condition/ molding condition) itemB

→ Molding Information
(to-be-estimated condition/ molding condition) itemC

FIG.12

FIG.13

```
                    ┌─────────────┐
                    │    Start    │
                    └──────┬──────┘
                           │                    S31
         ┌─────────────────┴─────────────────┐
         │    Acquire required film temperature    │
         └─────────────────┬─────────────────┘
                           │                    S32
         ┌─────────────────┴─────────────────┐
         │  Acquire not-to-be-estimated condition  │
         └─────────────────┬─────────────────┘
                           │                    S33
         ┌─────────────────┴─────────────────┐
         │    Input film temperature and not-to-be-    │
         │      estimated condition to estimation      │
         │                  model                  │
         └─────────────────┬─────────────────┘
                           │                    S34
         ┌─────────────────┴─────────────────┐
         │       Acquire molding condition       │
         └─────────────────┬─────────────────┘
                           │                    S35
         ┌─────────────────┴─────────────────┐
         │  Display information related to molding  │
         │                condition                │
         └─────────────────┬─────────────────┘
                           │
                    ┌──────┴──────┐
                    │     End     │
                    └─────────────┘
```

## INTERNATIONAL SEARCH REPORT

| International application No. |
| --- |
| **PCT/JP2023/036824** |

| A. | CLASSIFICATION OF SUBJECT MATTER |
| --- | --- |

*B29C 48/92*(2019.01)i; *B29C 48/88*(2019.01)i; *B29C 55/14*(2006.01)i
FI:  B29C48/92; B29C48/88; B29C55/14

According to International Patent Classification (IPC) or to both national classification and IPC

| B. | FIELDS SEARCHED |
| --- | --- |

Minimum documentation searched (classification system followed by classification symbols)

B29C48/92; B29C48/88; B29C55/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2016-215393 A (KANEKA CORP) 22 December 2016 (2016-12-22) | 1-11 |
| A | JP 2015-066679 A (FUJIFILM CORP) 13 April 2015 (2015-04-13) | 1-11 |
| A | JP 2020-152097 A (JAPAN STEEL WORKS LTD) 24 September 2020 (2020-09-24) | 1-11 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 December 2023** | **12 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/036824**

| Patent document cited in search report | | | Publication date (day/month/year) | Patent family member(s) | | | Publication date (day/month/year) |
|---|---|---|---|---|---|---|---|
| JP | 2016-215393 | A | 22 December 2016 | (Family: none) | | | |
| JP | 2015-066679 | A | 13 April 2015 | CN | 104512033 | A | |
| | | | | KR | 10-2015-0034610 | A | |
| | | | | TW | 201511923 | A | |
| JP | 2020-152097 | A | 24 September 2020 | US | 2020/0290259 | A1 | |
| | | | | CN | 111688153 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019166702 A